# EUROPEAN PATENT SPECIFICATION

(11) **EP 1 392 935 B1**
(45) Date of publication and mention of the grant of the patent: **19.10.2005**
(21) Application number: 01274288.8
(22) Date of filing: 21.11.2001
(51) Int. Cl.: E03C 1/04, F16L 27/04

(54) **DUCT FOR FEEDING WATER IN A SHOWER HEAD**
LEITUNG ZUR ZUFÜHRUNG VON WASSER IN EINEM BRAUSEKOPF
CONDUIT D'AMENEE D'EAU POUR POMMEAU DE DOUCHE

(30) Priority: 04.06.2001 IT MN20010025
(43) Date of publication of application: 03.03.2004
(73) Proprietor: Nobili, Fabrizio, 6534 San Vittore (CH)
(72) Inventor: Nobili, Fabrizio, 6534 San Vittore (CH)
(74) Representative: Modiano, Guido
(86) International application number: PCT/EP2001/013526
(87) International publication number: WO 2002/099206

(56) References cited:
- WO-A-00/38560
- GB-A- 1 350 938
- US-A- 4 747 622
- US-A- 5 613 638

## Description

### Technical field

The present invention relates to a duct for feeding water in a shower head.

### Background art

The configuration of shower heads is known which comprises a duct for feeding water from an inlet connector, suitable to connect by means of a flexible hose to a dispensing head; such duct is contained within an enclosure that is open at one end in order to allow the exit of the connector and has, at its other end, a large opening for the coupling of the head.

WO-A-0038560 discloses a jet structure which has an articulated section comprising a plurality of articulated elements interconnected to provide a wide range of motion of the jet duct. Even if this patent does not disclose a shower head, it solves the problem of realizing an articulated joint between inlet and outlet sections of a duct, and therefore it is here cited as pertinent prior art.

### Disclosure of the Invention

The enclosure has the purpose of allowing comfortable grip by the user and also has the particularly important purpose of giving the item a high aesthetic value; accordingly, enclosures having the most disparate shapes are commercially available.

Of course, the shape of the water feed duct must be compatible with the shape of the enclosure meant to contain it, and currently a specific duct is manufactured for each enclosure type.

This fact entails high costs for shower head manufacturers, and accordingly the aim of the present invention is to provide a duct for feeding water that can be inserted in enclosures having different shapes.

This aim is achieved by a duct for feeding water in a shower head, according to claim 1.

### Brief description of the drawings

Further characteristics and advantages of the present invention will become better apparent from the description of a preferred but not exclusive embodiment of the invention, illustrated only by way of non-limitative example in the accompanying drawings, wherein:
Figure 1 is a side view of a shower head that comprises the duct according to the invention;
Figure 2 is a perspective view of the shower head of Figure 1 with the upper housing removed;
Figure 3 is a perspective exploded view of the shower head;
Figure 4 is a perspective view of a detail of Figure 3;
Figures 5 and 6 are respectively a side view and a partially sectional view of the duct in the configuration of maximum divarication of the two sections in one direction;
Figures 7 and 8 are respectively a side view and a partially sectional view of the duct in the configuration of maximum divarication of the two sections in the opposite direction with respect to Figures 5 and 6.

### Ways of carrying out the invention

With reference to the figures, the reference numeral 1 generally designates a duct contained within an enclosure formed by a lower portion 2a and an upper portion 2b in order to feed water from an inlet connector 1a to a dispensing head 1b.

The duct 1 comprises, in an intermediate position, an articulated joint, generally designated by the reference numeral 3, that is described in detail hereafter and is suitable to allow divarications other than the aligned configuration of the resulting two sections located upstream and downstream of the articulated joint: a section 4, which comprises the inlet connector 1a and is fixed to the lower portion 2a of the enclosure by way of screws 5a and 5b inserted in holes provided in a plate 6 that is monolithically connected to section 4, and a section 7, which comprises a hood 7a for conveying water to the dispensing head 1b, which is fixed to the lower portion 2a by way of screws 8a and 8b inserted in the holes provided respectively in brackets 9a and 9b connected monolithically to section 7.

The articulated joint 3 is now described in detail.

The articulated joint 3 comprises hemispherical tip 10, which is rotatably inserted at its shank 10a in a seat 7b provided at the end of the section 7 that is directed toward the articulated joint, and the section 4 has, at its end 4a, which in turn is directed toward the articulated joint, a surface that is complementary to the hemispherical tip 10 and allows to accommodate a sealing gasket 11.

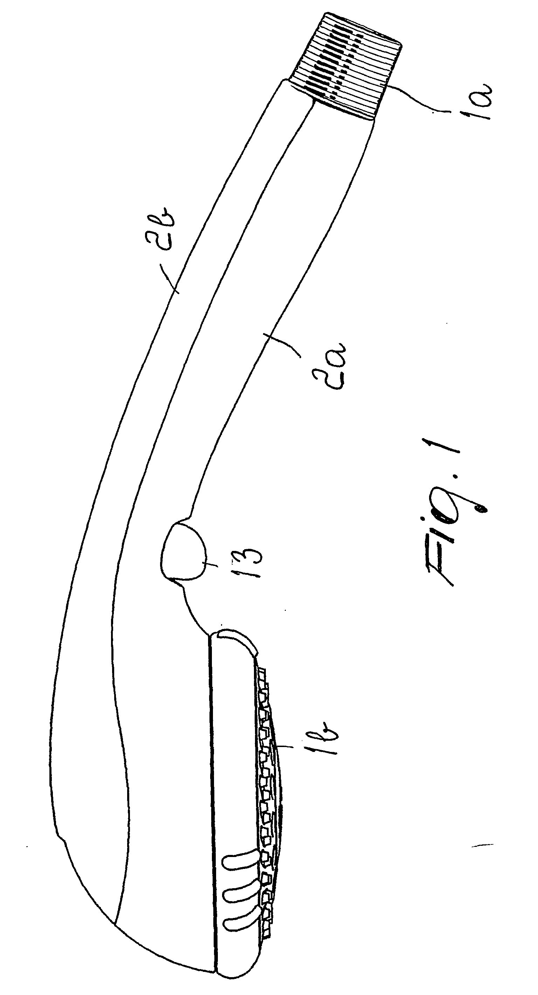

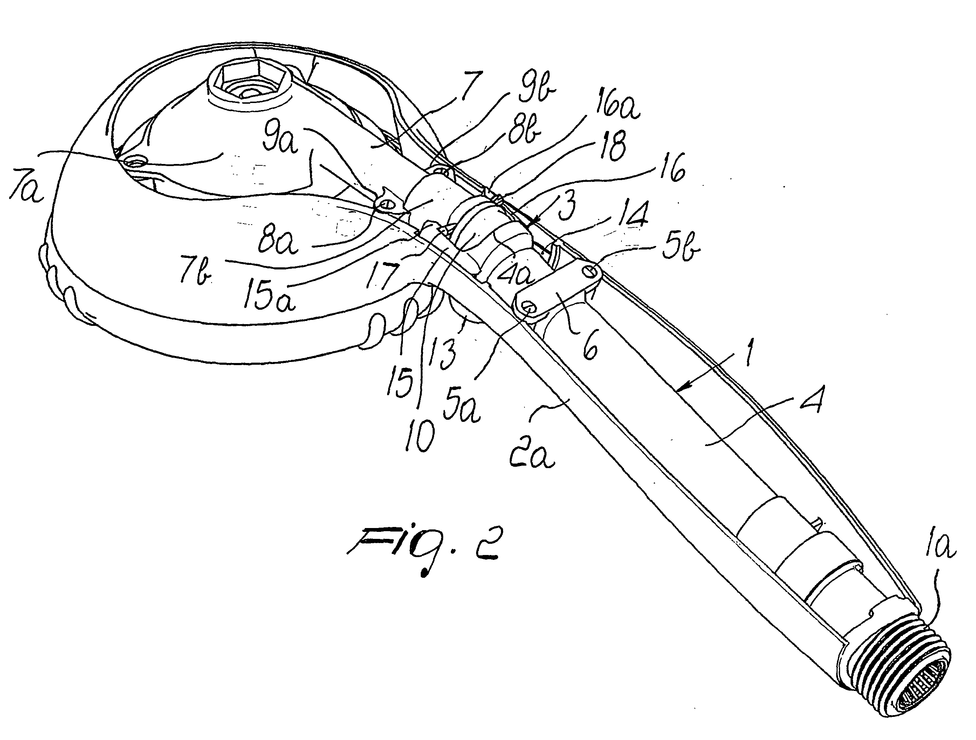

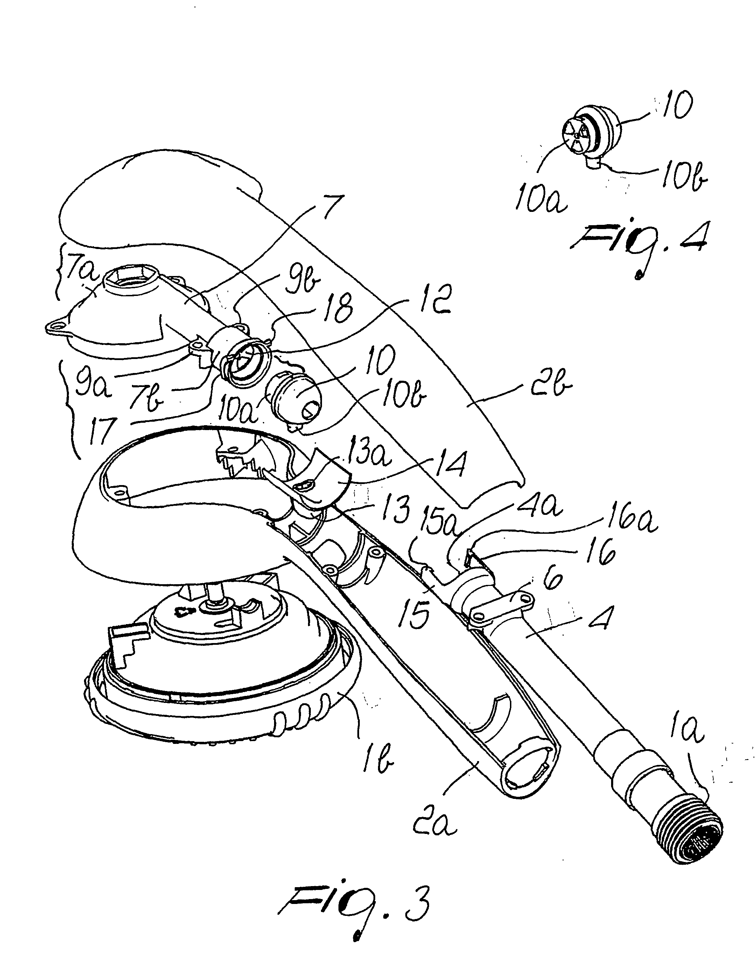

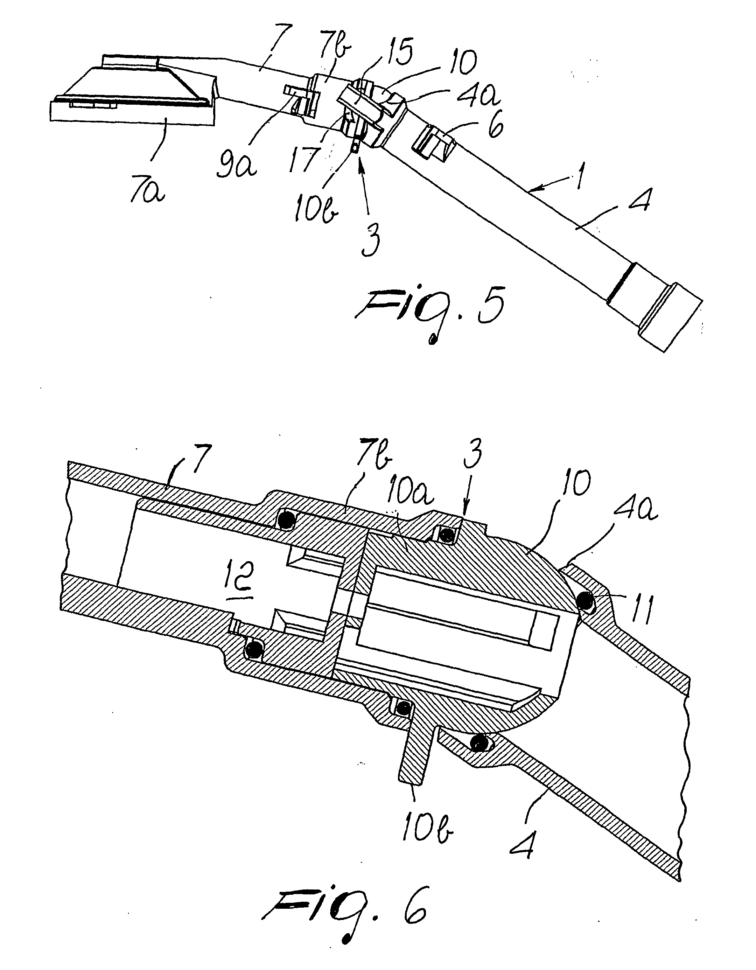

The hemispherical tip 10, with its shank 10a, is shaped like the movable element of a flow-rate limiter, known per se and therefore not described in detail, in which a fixed tube-shaped element 12 is inserted in the seat 7b; in order to allow the actuation of the device by a user, the tip 10 is provided with a lug 10b, which is suitable to enter, by passing through an opening 13a defined in a cradle 14, a lever 13 that protrudes from the cradle 14 rested on the lower portion 2a of the enclosure in order to exit from said portion, as clearly shown in Figure 1, so that it can be actuated by the user.

The articulated joint 3 is provided with means for the mutual engagement of the two sections 4 and 7 of the duct, which comprise two lugs 15 and 16 that protrude from the section 4 and are provided with teeth 15a and 16a, which are suitable to mate with a snap action, thanks to the elasticity of the lugs, respectively with guides 17 and 18 that protrude from the section 7 and are provided identically with a circular shape centered on the rotation axis of the articulated joint.

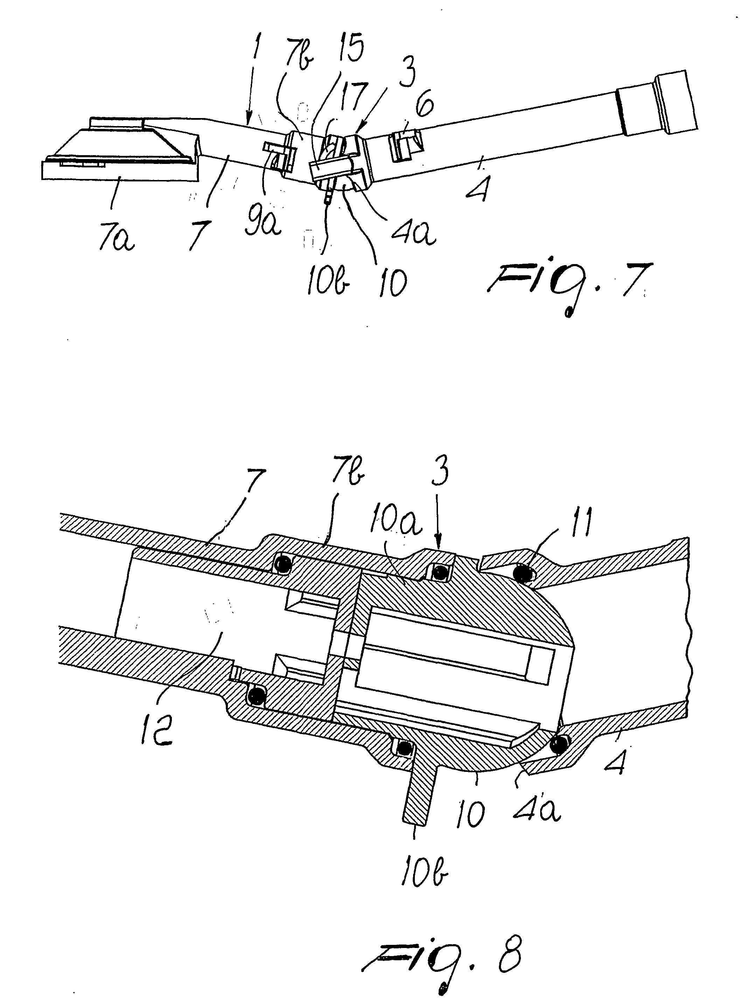

The presence of the articulated joint 3 shaped as described thus allows the duct 1 to assume configurations with different divarications (i.e. different angles one with respect to another) of the two sections 4 and 7 with respect to each other between the two extreme conditions shown respectively in Figures 5 and 7, and this fact clearly allows to adapt the duct 1 according to the invention to a very wide range of enclosure shapes.

The described invention is susceptible of numerous modifications and variations, all of which are within the scope of the inventive concept; thus, for example, the articulated joint 3 can be provided in any shape, and in particular a hemispherical tip can be monolithically associated with the end of one of the sections duct, excluding the presence of the flow-rate limiter.

The requirement of having a perfectly hermetic articulated joint 3 is of course always maintained.

## Claims

1. A duct (1) for feeding water in a shower head, said duct being accommodated within an enclosure (2a,2b) and being adapted to convey water between an inlet connector (1a) and a dispensing head (1b), comprising, in an intermediate position, an articulated joint (3) that allows the two sections (4,7) of said duct, located upstream and downstream of said articulated joint, to divaricate with respect to an aligned configuration wherein the articulated joint (3) comprises means for the mutual engagement of the two sections, said means comprising at least two lugs (15,16) that protrude from one section (4) and are provided with an end tooth (15a, 16a) that is suitable to mate with a snap action with a guide (17, 18) which is located on the other section (7) and has a circular shape centered on the rotation axis of the articulated joint (3).

2. The duct according to claim 1, **characterized in that** it comprises independent means (5a,5b,8a,8b) for fixing the two sections (4,7) to the enclosure (2a,2b).

3. The duct according to one or more of the preceding claims, **characterized in that** the ends of the two sections that converge at the articulated joint (3) respectively have a hemispherical tip (10) and a shape that is complementary with respect to said tip.

4. The duct according to one or more of the preceding claims, **characterized in that** the end surface of a section that is complementary with respect to the hemispherical tip (10) provided at the end of the other section has a shape that is suitable to accommodate a sealing gasket (11).

5. The duct according to one or more of the preceding claims, **characterized in that** the hemispherical tip (10) is monolithically associated with the end of one section of the duct.

6. The duct according to one or more of the preceding claims, **characterized in that** the hemispherical tip (10) is rotatably associated with the end of a section of the duct and is shaped like the movable element of a flow-rate limiter, the fixed element of said device being associated inside said section.

7. The duct according to one or more of the preceding claims, **characterized in that** the hemispherical tip (10) rotatably associated with the end of a section of the duct is provided with a lug (10b) that is suitable to enter a lever (13) that protrudes from a cradle (14) rested on the lower portion of the enclosure (2) in order to protrude from said enclosure so that it can be actuated by a user.

## Patentansprüche

1. Wasserzuführ-Leitung (1) in einem Duschkopf, wobei die Leitung in einem Mantel (2a, 2b) aufgenommen ist und so ausgelegt ist, dass sie Wasser zwischen einem Einlassanschluss (1 a) und einem Abgabekopf (1 b) transportiert und in einer Zwischenstellung eine Gelenkverbindung (3) aufweist, die es den beiden Abschnitten (4, 7) der Leitung, die stromauf und stromab von der Gelenkverbindung angeordnet sind, ermöglicht, sich bezüglich einer ausgerichteten Form abzuspreizen, wobei die Gelenkverbindung (3) Einrichtungen für den gegenseitigen Eingriff der beiden Abschnitte aufweist und die Einrichtungen wenigstens zwei Laschen (15, 16) haben, die von einem Abschnitt (4) vorstehen und mit einem Endzahn (15a, 16a) versehen sind, der dazu geeignet ist, durch Schnappwirkung mit einer Führung (17, 18) zusammenzupassen, die sich an dem anderen Abschnitt (7) befindet und eine Kreisform hat, die auf der Drehachse der Gelenkverbindung (3) zentriert ist.

2. Leitung nach Anspruch 1, **dadurch gekennzeichnet, dass** sie unabhängige Einrichtungen (5a, 5b, 8a, 8b) zum Befestigen der beiden Abschnitte (4, 7) an dem Mantel (2a, 2b) aufweist.

3. Leitung nach einem oder mehreren der vorhergehenden Ansprüche, **dadurch gekennzeichnet, dass** die Enden der beiden Abschnitte, die jeweils an der Gelenkverbindung (3) konvergieren, ein halbkugeliges Ende (10) und eine Form haben, die komplementär bezüglich dieses Endes ist.

4. Leitung nach einem oder mehreren der vorhergehenden Ansprüche, **dadurch gekennzeichnet, dass** die Stirnfläche des Abschnitts, die komplementär bezüglich des halbkugelförmigen Endes (10) an dem Ende des anderen Abschnitts vorgesehen ist, eine Form hat, die geeignet ist, eine Dichtung (11) aufzunehmen.

5. Leitung nach einem oder mehreren der vorhergehenden Ansprüche, **dadurch gekennzeichnet, dass** das halbkugelförmige Ende (10) an das Ende des Abschnitts der Leitung ein Stück damit bildend angeschlossen ist.

6. Leitung nach einem oder mehreren der vorhergehenden Ansprüche, **dadurch gekennzeichnet, dass** das halbkugelförmige Ende (10) dem Ende eines Abschnitts der Leitung drehbar zugeordnet ist und wie das bewegliche Element eines Durchsatzbegrenzers geformt ist, wobei das festgelegte Element dieser Vorrichtung innerhalb des Abschnitts angeschlossen ist.

7. Leitung nach einem oder mehreren der vorhergehenden Ansprüche, **dadurch gekennzeichnet, dass** das halbkugelförmige Ende (10), das mit dem Ende des Abschnitts der Leitung drehbar verbunden ist, mit einer Lasche (10b) versehen ist, die dazu geeignet ist, in einen Hebel (13) einzutreten, der aus einer auf dem unteren Teil des Mantels (2) ruhenden Wiege (14) und so aus dem Mantel vorsteht, dass er von einem Benutzer betätigt werden kann.

## Revendications

1. Conduit (1) d'amenée d'eau dans une pomme de douche, ledit conduit étant logé à l'intérieur d'une gaine (2a, 2b) et étant adapté pour transporter de l'eau entre un raccord d'entrée (1a) et une tête de distribution (1b), comprenant, dans une position intermédiaire, un joint articulé (3) qui permet aux deux sections (4, 7) dudit conduit, situées en amont et en aval dudit joint articulé, de bifurquer par rapport à une configuration alignée, dans lequel le joint articulé (3) comprend des moyens pour l'engagement mutuel des deux sections, lesdits moyens comprenant au moins deux oreilles (15, 16) qui font saillie d'une section (4) et sont munies d'une dent d'extrémité (15a, 16a) qui est adaptée pour s'engrener avec fixation immédiate avec un guide (17, 18) qui est situé sur l'autre section (7) et a une forme circulaire centrée sur l'axe de rotation du joint articulé (3).

2. Conduit selon la revendication 1, **caractérisé en ce qu'**il comprend des moyens indépendants (5a, 5b, 8a, 8b) pour fixer les deux sections (4, 7) à la gaine (2a, 2b).

3. Conduit selon l'une ou plusieurs des revendications précédentes, **caractérisé en ce que** les extrémités des deux sections qui convergent au niveau du joint articulé (3) ont respectivement une pointe hémisphérique (10) et une forme qui est complémentaire par rapport à ladite pointe.

4. Conduit selon l'une ou plusieurs des revendications précédentes, **caractérisé en ce que** la surface d'extrémité d'une section qui est complémentaire par rapport à la pointe hémisphérique (10) prévue à l'extrémité de l'autre section, a une forme qui est adaptée pour loger une garniture d'étanchéité (11)

5. Conduit selon l'une ou plusieurs des revendications précédentes, **caractérisé en ce que** la pointe hémisphérique (10) est associée de manière monolithique avec l'extrémité d'une section du conduit.

6. Conduit selon l'une ou plusieurs des revendications précédentes, **caractérisé en ce que** la pointe hémisphérique (10) est associée de manière rotative avec l'extrémité d'une section du conduit et est formée comme l'élément mobile d'un limiteur de débit, l'élément fixe dudit dispositif étant associé à l'intérieur de ladite section.

7. Conduit selon l'une ou plusieurs des revendications précédentes, **caractérisé en ce que** la pointe hémisphérique (10) associée de manière rotative avec l'extrémité d'une section du conduit est munie d'une oreille (10b) qui est adaptée pour faire entrer un levier (13) qui fait saillie d'une auge (14) reposant sur la portion inférieure de la gaine (2) afin de faire saillie de ladite gaine de manière à pouvoir être actionné par un utilisateur.
